# EUROPEAN PATENT APPLICATION

(11) **EP 3 998 416 A1**
(43) Date of publication of application: **18.05.2022**
(21) Application number: 20840998.7
(22) Date of filing: 02.07.2020
(51) Int. Cl.: F16F 1/36, F16F 15/124

(54) **BUFFER STOPPER**

(30) Priority: 12.07.2019 JP 2019129903
(71) Applicant: NOK Corporation, Minato-ku Tokyo 105-8585 (JP)
(72) Inventor: KURODA, Takayoshi, Saihakugun, Tottori 683-0362 (JP); ISHIKAWA, Tomoaki, Saihakugun, Tottori 683-0362 (JP)
(74) Representative: TBK
(86) International application number: PCT/JP2020/025994
(87) International publication number: WO 2021/010177

(57) **Abstract**

The buffer stopper 11 has a base 31 and an elastic body 51. The base 31 has a columnar shape having a through hole 32 in a center thereof and having recesses 33 at both ends (virtual surfaces including an end surface 37 of a straight part 36) thereof, and is formed of a material such as a metal or resin, which is harder than a rubber-like elastic material used as a material for the elastic body 51. The elastic body 51 is an integrally-molded product made of a rubber-like elastic material. The elastic body 51 includes a pair of end elastic bodies 52 fitted into the recesses 33 of the base 31 and protruding from both ends of the base 31 and connects the pair of end elastic bodies 52 by a central elastic body 53 fitted into the through hole 32.

## Description

### Technical Field

The present disclosure relates to a buffer stopper.

### Background Art

A buffer stopper is used as a component of a torque fluctuation absorbing device incorporated in a transfer connected to a transmission, for example. In view of a structure that the transfer plays a role of distributing the output of an engine to front and rear shafts via a propeller shaft, the torque fluctuates depending on the input from the engine. The torque fluctuation absorbing device absorbs such fluctuation torque.

This type of torque fluctuation absorbing device includes a damper, a hysteresis part, and a limiter, and is arranged between an input rotating member connected to a crankshaft of the engine and an output rotating member connected to the side to be driven. The damper absorbs the fluctuation torque by a spring force of a coil spring arranged between the input rotating member and the output rotating member. The hysteresis part absorbs the fluctuation torque by a hysteresis torque.

The buffer stopper is arranged inside the coil spring and constitutes a part of the damper. More specifically, the input rotating member and the output rotating member are each provided with a pair of stopper pieces which regulate the twist of the damper at a prescribed angle. The buffer stopper is arranged between these stopper pieces, and absorbs and relaxes impact when the stopper pieces collide with each other.

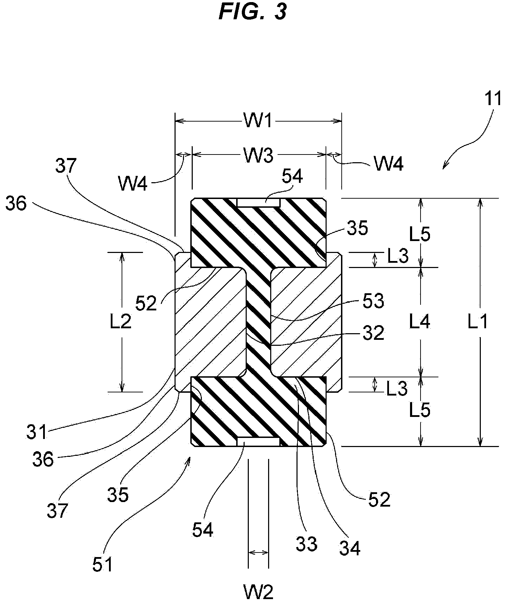

Patent Document 1 discloses various forms of the buffer stopper. They are various forms shown as "cushion members" in FIGS. 3, 5, 6, and the like.

The cushion member (26) shown in FIGS. 3 (A) to 3 (F) of Patent Document 1 includes an elastic body (32) formed in a columnar shape, and the side surface of the elastic body is covered with a wear-resistant material (31, 33) (refer to paragraph [0047] of Patent Document 1). The wear-resistant material is formed to be larger in diameter than the elastic body and provided so as to prevent the coil spring from being worn even when the coil spring comes into contact with the cushion member (refer to paragraph [0041] of Patent Document 1).

The cushion member (26) shown in each of FIGS. 5 (A)-(D), 6 (E)-(H), etc. of Patent Document 1 is provided with uneven parts fitted to each other between the elastic body and the wear-resistant material to improve a connection strength between the elastic body and the wear-resistant material (refer to paragraphs [0054]-[0057] in Patent Document 1).

### Prior Art Document

### Patent Document

Patent Document 1: Japanese Patent Application Laid-Open No. 2012-211669

### Summary

### Problem to be Solved

In the buffer stoppers (cushion member (26)) of various forms described in Patent Document 1, the cushioning characteristics are determined by the material, axial length, and diameter of the elastic body. Therefore, if the cushioning characteristics are to be adjusted under the condition that the materials are the same, the axial length must be changed if the diameter of the elastic body is constant, and the diameter must be changed if the axial length is constant.

On the other hand, considering that the buffer stopper is arranged inside the coil spring and that its axial length determines the collision position of the pair of stopper pieces, the dimensions allowed as the diameter and axial length of the elastic body are naturally converged to a certain range. It is desired to realize a buffer stopper which is capable of adjusting the cushioning characteristics more flexibly.

An object of the present disclosure is to obtain a buffer stopper capable of adjusting buffer characteristics more flexibly.

### Means for Solving the Problem

One aspect of a buffer stopper of the present disclosure includes a base harder than a rubber-like elastic material, which has a columnar shape having a through hole in a center and having recesses at both ends, and an elastic body which is an integrally molded product of the rubber-like elastic material, in which a pair of end elastic bodies fitted into the recesses and projecting from both ends of the base are connected by a central elastic body fitted into the through hole.

One aspect of a method for molding a buffer stopper of the present disclosure is to insert a base harder than a rubber-like elastic material, having a columnar shape having a through hole in a center and having recesses at both ends into a molding die, introduce the rubber-like elastic material into the molding die, and vulcanize and mold an elastic body in which a pair of end elastic bodies fitted into the recesses and projecting from both ends of the base are connected by a central elastic body fitted into the through hole.

### Effect

According to the present disclosure, it is possible to obtain a buffer stopper capable of adjusting buffer characteristics more flexibly.

### Brief Description of Drawings

FIG. 1 is a front view showing a buffer stopper of one embodiment.
FIG. 2 is a perspective view showing the buffer stopper having a cross section at its center.
FIG. 3 is a vertical cross-sectional front view of the buffer stopper.

### Description of Embodiments

An embodiment of a buffer stopper will be described based on the drawings.

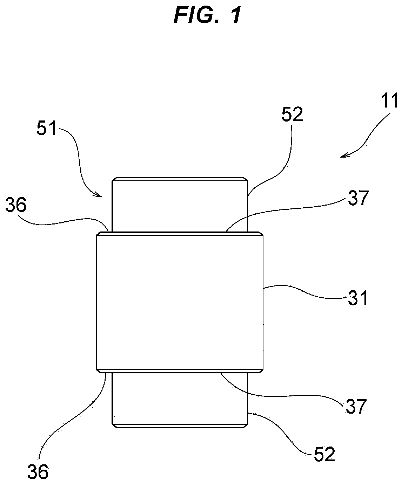

As shown in FIG. 1, the buffer stopper 11 is formed of a base 31 and an elastic body 51 both having a cylindrical shape. The elastic body 51 projects coaxially from both ends of the base 31 in the axial direction thereof. The elastic body 51 is smaller than the base 31 in diameter.

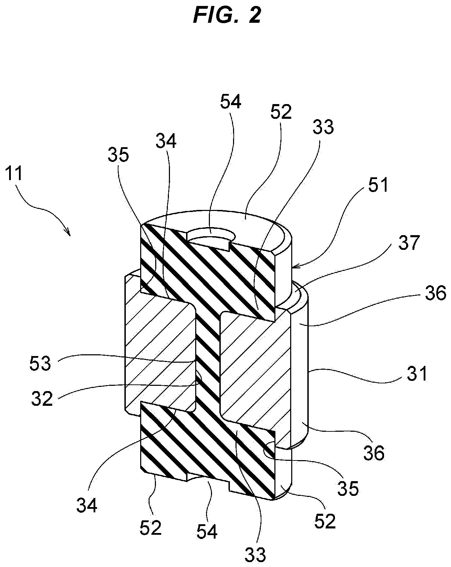

As shown in FIG. 2, the base 31 has a through hole 32 in the center thereof and has recesses 33 at both ends thereof respectively. A bottom surface 34 of each recess 33 has a flat shape along a direction orthogonal to the axial direction of the through hole 32. From these bottom surfaces 34, edges each having an inner side wall 35 rise along the axial direction of the through hole 32. For convenience of description, the edge rising from the bottom surface 34 is referred to as a straight part 36. Both ends of the base 31 described above defines planes including end surfaces 37 of the straight part 36.

The elastic body 51 is an integrally molded product formed of a rubber-like elastic material, in which a pair of end elastic bodies 52 which fit in the respective recesses 33 and a central elastic body 53 which fits in the through hole 32 are integrally connected. At the end of the end elastic body 52, a concave part 54 is provided on the axis of the through hole 32.

The base 31 is formed of a material harder than the elastic body 51 formed of the rubber-like elastic material, such as a metal or resin as for its material.

As shown in FIG. 3, the buffer stopper 11 has the total length of a length L1. The total length of the base 31 is a length L2. A length L3 is the height of the straight part 36. A separation distance between the bottom surfaces 34 at both ends of the base 31 is a length L4, and a length L5 is an axial length of the end elastic body 52.

The buffer stopper 11 has the full width of a width W1. A width W2 is the diameter of the through hole 32, a width W3 is the diameter of the end elastic body 52, and a width W4 is the wall thickness of the straight part 36.

The buffer stopper 11 described above is manufactured by vulcanization molding of a rubber-like elastic material into which the base 31 is inserted. Its manufacturing method includes the following two steps.
(First step) Step of inserting the base 31 into a molding die (not shown), and
(Second step) Step of introducing the rubber-like elastic material into the molding die into which the base 31 is inserted.

The molding die used in the first step has a pair of cavities (not shown) in a region where the pair of end elastic bodies 52 are molded. A gate (not shown) is provided, for example, at a position where it communicates with only one cavity. The molding die has a region in the middle of the pair of cavities, which holds the base 31. The base 31 is inserted into the molding die by being held in this region.

In the second step, a rubber-like elastic material is introduced from the gate into one cavity. The rubber-like elastic material flows into the through hole 32 provided in the base 31, and further flows into the cavity on the opposite side. Consequently, the elastic body 51 of the integrally molded product in which the pair of end elastic bodies 52 are integrally connected by the central elastic body 53 is vulcanized/molded.

In the second step, an adhesive is not applied to the base 31. Therefore, the elastic body 51 is not vulcanized and adhered to the base 31.

In this configuration, the buffer stopper 11 is used by being incorporated in a damper of a torque fluctuation absorbing device incorporated in a transfer connected to a transmission. The damper absorbs a fluctuation torque by a spring force of a coil spring arranged between an input rotating member and an output rotating member. Each of the input rotating member and the output rotating member is provided with a pair of stopper pieces which regulate the twist of the damper at a predetermined angle. The buffer stopper 11 is arranged between these stopper pieces and absorbs and mitigates impact when they collide with each other (all of the above are not shown).

When the damper is operating, the coil spring may come into contact with the buffer stopper 11. At this time, since the base 31 having the diameter width W1 has a diameter larger than that of the end elastic body 52 having the diameter width W3 in the buffer stopper 11, the coil spring does not contact the elastic body 51 (end elastic body 52), but contacts the outer peripheral surface of the base 31. With this, the wear of the coil spring is suppressed. Further, it is possible to prevent the elastic body 51 from being pinched by the coil spring and being damaged.

Since the diameter width W2 of the through hole 32 is much smaller than the diameter width W3 of the end elastic body 52, the buffer stopper 11 ensures fixed holding of the elastic body 51 relative to the base 31 despite that the elastic body 51 is not vulcanized and adhered to the base 31.

At this time, the end elastic body 52 is restrained from moving in the radial direction and held more stably by the inner side wall 35 of the straight part 36. The holding state of the end elastic body 52 by the straight part 36 is determined by the depth of the recess 33 determined by the height (length L3) of the straight part 36.

The configuration in which the end elastic body 52 is fitted in the recess 33 also plays a role of enhancing the compressive force of the end elastic body 52 upon the compression of the buffer stopper 11. The end elastic body 52 compressed in the axial direction is enhanced in compressive force by the inner side wall 35 of the straight part 36, and correspondingly exhibits a high repulsive force. Consequently, when excessive impact energy is applied to the buffer stopper 11, it is possible to further enhance the effect of reducing hammering sound and the like.

The advantage of the buffer stopper 11 of the present embodiment is a H-type shape of the elastic body 51 that connects the pair of end elastic bodies 52 with the central elastic body 53.

The shape of such elastic body 51 brings about an advantage that the buffer characteristics of the buffer stopper 11 can be changed without changing its axial length and diameter. More specifically, the axial length L5 of each of the pair of end elastic bodies 52 can be changed by appropriately setting the length L4 connecting the bottom surfaces 34 of the recesses 33 positioned at both ends of the base 31. Since the rigidity of the end elastic body 52 depends on its axial length L5, the buffer characteristics of the buffer stopper 11 can be freely changed by appropriately setting the length L5 without changing the axial length and diameter of the buffer stopper 11 itself.

Thus, the fact that the buffer characteristics of the buffer stopper 11 can be freely changed without changing the axial length and diameter of the buffer stopper 11 itself is of great significance in terms of the configuration of the buffer stopper 11 being used with being incorporated into the damper of the torque fluctuation absorbing device. Considering that the buffer stopper 11 is arranged inside the coil spring and that the axial length thereof determines the collision position of the pair of stopper pieces, the dimensions allowable as the diameter and axial length of the buffer stopper 11 naturally have no choice but to converge to a certain range.

Another significance that the buffer characteristics are able to freely change without changing the axial length and diameter of the buffer stopper 11 itself resides in that a plurality of types of buffer stoppers 11 different in buffer characteristics can be manufactured without changing the molding die. The buffer characteristics of the buffer stopper 11 depend on the axial length L5 of the end elastic body 52 as described above. This length L5 is determined by the length L4 connecting the bottom surfaces 34 of the recesses 33 positioned at both ends of the base 31. If the total length L2 of the base 31 does not change, it is not necessary to change the molding die, so that the change in the length L4 does not affect the molding die at all. Thus, the H-type shape of the above elastic body 51 brings about an advantage that it is possible to manufacture a plurality of types of buffer stoppers 11 different in buffer characteristics without changing the molding die.

In addition, the buffer stopper 11 of the present embodiment does not require vulcanization adhesion of the elastic body 51 to the base 31, and the number of pieces taken during vulcanization molding of the elastic body 51 can be increased. It is therefore possible to achieve a reduction in cost.

Various changes and modifications are allowed during implementation.

### Description of Reference Numerals

- 11: buffer stopper
- 31: base
- 32: through hole
- 33: recess
- 34: bottom surface
- 35: inner side wall
- 36: straight part
- 37: end surface
- 51: elastic body
- 52: end elastic body
- 53: central elastic body
- 54: concave part

## Claims

1. A buffer stopper comprising:
a base harder than a rubber-like elastic material, which has a columnar shape having a through hole in a center and having recesses at both ends; and
an elastic body which is an integrally molded product of the rubber-like elastic material, in which a pair of end elastic bodies fitted into the recesses and projecting from both ends of the base are connected by a central elastic body fitted into the through hole.

2. The buffer stopper according to claim 1, wherein a side wall of the recess runs parallel to an axial direction of the through hole.

3. A method for molding a buffer stopper, comprising the steps of:
inserting a base harder than a rubber-like elastic material, which has a columnar shape having a through hole in a center and having recesses at both ends into a molding die; and
introducing the rubber-like elastic material into the molding die and vulcanizing and molding an elastic body in which a pair of end elastic bodies fitted into the recesses and projecting from both ends of the base are connected by a central elastic body fitted into the through hole.

4. The method for forming the buffer stopper according to claim 3, wherein a side wall of the recess runs parallel to an axial direction of the through hole.
